# EUROPEAN PATENT SPECIFICATION

(11) **EP 3 622 019 B1**
(45) Date of publication and mention of the grant of the patent: **24.12.2025**
(21) Application number: 17909391.9
(22) Date of filing: 08.05.2017
(51) Int. Cl.: C09J 7/38, C09J 109/06, C09J 153/02, C09J 193/04

(54) **HIGH PERFORMANCE REACTIVE PRESSURE SENSITIVE ADHESIVE COMPOSITION**
HOCHLEISTUNGSFÄHIGE REAKTIVE DRUCKEMPFINDLICHE KLEBSTOFFZUSAMMENSETZUNG
COMPOSITION ADHÉSIVE AUTOCOLLANTE RÉACTIVE HAUTE PERFORMANCE

(43) Date of publication of application: 18.03.2020
(73) Proprietor: Avery Dennison Corporation, Mentor, OH 44060 (US)
(72) Inventor: SHEN, Biao, Glendale, CA 91203 (US); YANG, Yurun, Glendale, CA 91203 (US); ZHU, Yuanhua, Glendale, CA 91203 (US); WANG, Shaohua, Glendale, CA 91203 (US); PAN, Xiaoming, Glendale, CA 91203 (US); ZHANG, Jun J., Glendale, CA 91203 (US)
(74) Representative: Müller-Boré & Partner Patentanwälte PartG mbB
(86) International application number: PCT/CN2017/083492
(87) International publication number: WO 2018/205106

(56) References cited:
- WO-A1-98/55683
- CN-A- 101 233 207
- CN-A- 102 171 302
- CN-A- 102 317 393
- CN-A- 104 662 112
- CN-A- 106 133 095
- US-A- 5 274 036
- US-A- 5 439 963
- US-A1- 2006 034 905
- US-A1- 2007 231 571
- US-A1- 2008 076 860
- SI GROUP: "Product Database", 16 October 2006 (2006-10-16), pages 1 - 8, XP055736060, Retrieved from the Internet <URL:https://web.archive.org/web/20061016020900/https://www.siigroup.com/productdb.asp> [retrieved on 20201002]

## Description

### FIELD OF THE INVENTION

The present invention relates generally to pressure sensitive adhesives ("PSAs"), in particular to high performance reactive PSAs ("HPR-PSAs"). The application also relates to labels containing the HPR-PSAs.

### BACKGROUND OF THE INVENTION

PSAs are easy to handle in solid form. They can quickly form adhesive bonds without significant supplemental processing. PSAs generally have a long shelf life and can provide a convenient and economical way to label articles of commerce, such as glass, metal, and plastic containers for consumer and industrial products. PSAs are thus widely used for the manufacture of self-adhesive labels, which are fastened to the articles for the purpose of presenting information (such as a barcode, description, or price) and/or for decorative purposes.

Conventionally, label and tape applications use holtmelt PSA because of its good workability during application. However, hotmelt PSA tends to creep under load and cannot be used in applications that require very high levels of holding power and lap shear strength. An example of these applications is automobile tire labels.

Other labels and tape applications involve cross-linked PSA. The adhesive in these labels comprise curing agents which react with base polymer during the coating of the adhesive to the facestock. In use, the cross-linking reactions do not occur upon attachment of the label to the substrate.

US Patent No. 5,439,963 describes a pressure sensitive adhesive having a thermoplastic elastomeric component comprising about 50-100 parts of a diblock styrene-isoprene copolymer and about 0-50 parts of a styrene-isoprene-styrene triblock copolymer. The adhesive comprises about 25-150 parts per 100 parts of a tackifier resin for said elastomeric component, and about 5-40 parts of a heat reactive phenolic resin curing agent for said adhesive.

US Patent No. 5,274,036 discloses a pressure sensitive adhesive comprising a solid rubber and a liquid rubber in a ratio of about 1:0.5 and about 1:7. The solid rubber comprises a block copolymer having the configuration A-B-A wherein each A is a thermoplastic styrene polymer block, the total block A content being from about 5 to about 50 percent by weight of the block copolymer and B is an elastomeric polymer block of isoprene. It also discloses using a heat reactive phenol formaldehyde resin as a curing agent by using about 5-40 parts of phenol formaldehyde resin with about per 100 of solid rubber.

US Patent No. 3,232,429 discloses a pressure-sensitive adhesive comprising an aldehyde resin reactive elastomer, a tackifier, a curing agent and a compatible acid accelerator. The elastomer may be a butadiene and styrene copolymer and the curing agent maybe alkylphenol-formaldehyde resins.

Generally speaking, these PSAs are already crosslinked before being applied to the substrate; the crosslinking reactions are completed during the coating of the PSA to the facestock. Even in view of these references, the need remains for a reactive PSA, which remains substantially uncrosslinked during the coating process, but becomes crosslinked and becomes a structure adhesive upon curing under high temperatures typically required for applications, such as vulcanization of tires.

US 2006/0034905 A1 describes an adhesive composition comprising a hydrophobic polymer; an elastomeric plasticizer; a tackifying resin; a hydrophilic polymer; a complementary polymer capable of hydrogen bonding to the hydrophilic polymer; and clay particles. US 5,274,036 A describes a pressure sensitive adhesive formed of a liquid and solid rubber which is substantially resin free. WO 98/55683 A1 describes a PSA-promoted process for removing contaminants from paper pulp.

### SUMMARY OF THE INVENTION

Disclosed herein is a unique high performance reactive pressure se ("HPR-PSA") composition and a process to coat this PSA. The adhesive not only has features of a PSA, e.g., good adhesive and reposition performance and coatability during assembly process, but also has the performance of a structure adhesive upon being cured at an elevated temperature, e.g., high static shear and peel strength.

In one aspect, provided herein is an adhesive comprising: a first rubber comprising a styrene-isoprene-styrene ("SIS") copolymer in an amount of from 10 to 50 wt%, based on the total weight of the adhesive, a second rubber comprising a styrene-butadiene ("SB") copolymer in an amount of from 10 to 50 wt%, based on the total weight of the adhesive. The weight ratio of SIS copolymer to SB copolymer ranges from 4:1 to 0.25:1. The adhesive further comprises a tackifier that is a mixture of hydrocarbon resin and rosin resin, wherein the total amount of tackifier ranges from 10 to 75 wt%, based on the total weight of the adhesive, and wherein the weight ratio of hydrocarbon resin to rosin resin is from 5:1 to 1:5; and a curing agent comprising a phenolic derivative free of sulfur, wherein the amount of curing agent ranges from 1 to 15 wt%, based on the total weight of the adhesive.

The curing agent comprises a phenolic derivative and is essentially free of sulfur. In one particular embodiment, the phenolic derivative comprises bromized phenol formaldehyde, e.g., bromized alkyl phenol formaldehyde.

The adhesive comprises from 10 to 50 wt% SIS copolymer, based on the total weight of the adhesive. The adhesive comprises from 10 to 50 wt% SB copolymer, based on the total weight of the adhesive. In some cases, the weight ratio of the tackifier to the combined SIS and SB copolymers ranges from 1:9 to 4:1. In some embodiments, the amount of rosin resin in the adhesive ranges from 5 to 40 wt% based on the total weight of the adhesive. In some embodiments, the amount of hydrocarbon resin in the adhesive ranges from 5 to 40 wt% based on the total weight of the adhesive. The weight ratio of hydrocarbon resin to rosin resin ranges from 5:1 to 1:5. The total amount of tackifier ranges from 10 to 75 wt% based on the total weight of the adhesive.

In some embodiments, the hydrocarbon resin in the adhesive is selected from the group consisting of aliphatic hydrocarbon having 5 carbon atoms, aromatic hydrocarbon having 9 carbon atoms, dicyclopentadiene, and mixtures thereof. In some embodiments, the rosin resin is selected from the group consisting of glycerol ester, pentaerythritol ester, and mixtures thereof. In some embodiments, the curing agent is a mixture of alkyl phenol formaldehyde and bromized alkyl phenol formaldehyde. The amount of curing agent ranges from 1 to 15 wt% based on the total weight of the adhesive. In some embodiments, the curing agent has a methylol content that ranges from 7 wt% to 13 wt% based on the weight of the curing agent.

In some embodiments, the adhesive demonstrates a storage modulus of at least 300 Pa at 170°C before being cured. In some embodiments, the adhesive demonstrates a storage modulus of at least 1800 Pa at 170°C after being cured at 170°C for 10 minutes, or the adhesive demonstrates at least a 5-fold increase as compared to the storage modulus before curing. In some embodiments, the adhesive demonstrates a peel strength of at least 0.3 Newton/millimeter (8 Newton/inch) on stainless steel according to the FINAT-1 (2016) method before curing. In some embodiments, the adhesive demonstrates a shear strength of at least 10,000 minutes on stainless steel according to the FINAT-8 (2016) method before curing. In some embodiments, the adhesive demonstrates a lap shear ranging from 0.05 MPa to 2 MPa on stainless steel before curing. In some embodiments, the adhesive demonstrates a lap shear of at least 1 MPa on stainless steel after curing. In some embodiments, the adhesive demonstrates a D-shear ranging from 0.2 to 11.8 Newton/millimeter (5 to 300 Newton/inch) before curing. In some embodiments, the adhesive demonstrates a D-shear ranging from 3.94-78.74 Newton/millimeter (100-2,000 Newton/inch) after curing.

The present invention further provides an adhesive solution for coating a facestock comprising: the above-described adhesive of the present invention and a solvent. In some embodiments, the adhesive solution comprises between 25 wt% and 75 wt% solvent based on the total weight of the adhesive solution. In some embodiments, the adhesive solution demonstrates a viscosity of 100 mPa*s - 5000 mPa*s (100-5000 cps) . In some embodiments, the adhesive solution has a solid content ranging from 30 wt% to 75 wt%. In some embodiments, the solvent used to prepare the adhesive solution is an aromatic solvent.

There is further generally described herein a method of producing an adhesive solution comprising dissolving in a solvent at a temperature of less than 50°C i) a first rubber comprising SIS copolymer, a second rubber comprising a SB copolymer, ii) a tackifier comprising a hydrocarbon resin and a rosin resin, iii) a curing agent, wherein the curing agent is phenolic resin to form an adhesive solution. In some embodiments, the weight ratio of SIS to SB copolymers ranges from 4:1 and 0.25:1.

In some embodiments, the method further comprises coating a facestock with the adhesive solution described above and drying the adhesive solution at a temperature of less than 110°C to produce an adhesive layer on the facestock.

The present invention further provides a method for producing a label, wherein the method comprises a) dissolving in a solvent at ambient temperature the above-described adhesive of the present invention to form an adhesive solution, b) coating a facestock with the adhesive solution, and c) drying the adhesive solution at a temperature of less than 110°C, wherein the SIS and SB copolymers are substantially uncrosslinked.

There is further generally described herein a label comprising a facestock and an adhesive, wherein the adhesive is coated on the facestock and the adhesive comprises: a) a first rubber comprising a styrene-isoprene-styrene ("SIS") copolymer, b)a second rubber comprising a styrene-butadiene ("SB") copolymer, c) a tackifier that is a mixture of hydrocarbon resin and rosin resin, and d)a curing agent comprising a phenolic resin, wherein the weight ratio of SIS to SB copolymers ranges from 4:1 to 0.25:1, and wherein the SIS and the SB copolymers are substantially uncrosslinked.

In some embodiments, the SIS and the SB copolymers of the adhesive are crosslinked to a degree of between 10% to 45% after the adhesive is cured at 170°C for 10 min.

### BRIEF DESCRIPTION OF DRAWINGS

The invention is described in detail below with reference to the appended drawing.
FIG. 1 shows the result of a DSC analysis of the HPR-PSA demonstrating the reactivity of the adhesive and change in performance after the curing reaction.
FIG. 2 shows the results of a rheology analysis demonstrating the reactivity of the adhesive and change in performance after the curing reaction.
FIG. 3 shows the results of time scanning experiments (at 200°C) to show operation window for curing the HPR-PSA.
FIG. 4 shows the results of experiments of time scanning (at 140°C) to show operation window for curing of the HPR-PSA.

### DETAILED DESCRIPTION OF THE INVENTION

Some conventional pressure sensitive adhesives having a thermoplastic elastomeric component comprise diblock styrene-isoprene copolymer and a styrene-isoprene-styrene triblock copolymer along with a tackifier resin and a heat reactive phenolic resin curing agent. These PSAs do not utilize a styrene-butadiene copolymer in the thermoplastic elastomeric component and do not employ hydrocarbon or rosin as tackifiers. These conventional PSAs may be prepared by mixing the components to form a hot melt adhesive, as opposed to dissolving the components in a solvent to form a solution. The hot melt adhesive may then be coated on a facestock under high temperature. The high temperature triggers the curing reaction of the curing agent present in the adhesive while the hot melt adhesive is being coated on the facestock. Unfortunately, the performance characteristics of these PSAs are often insufficient for applications where high structural strength, static shear, and peel strength are desired. Also, with these PSAs, there is no need for the step of drying the adhesive solution after the adhesive is coated on the facestock. Drying is not necessary because no solvent is involved in the preparation process.

Some other PSAs are solvent-based PSAs and comprise a curing agent. With these PSAs, the cross-linking of the adhesive occurs before application of the label to the substrate;. The crosslinking reactions are completed during the coating of the PSA to the facestock. Essentially no reactions typically occur after the attachment of the label to the substrate.

Some other conventional PSAs comprise a solid rubber and a liquid rubber. The solid rubber may comprise a block copolymer. A heat reactive phenol formaldehyde resin may be used as a curing agent. Also, these adhesives do not contain the diblock copolymer of styrene-butadiene. As a result, the adhesive may lack desired balancing of tack and adhesion properties as well as good mechanical properties. Still other PSAs comprise a pressure-sensitive adhesive comprising an aldehyde resin reactive elastomer, a tackifier, a curing agent and a compatible acid accelerator. The elastomer may be a butadiene and styrene copolymer and the curing agent maybe alkylphenol-formaldehyde resins. However, these PSAs may suffer from the same lack of performance characteristics mentioned above.

The inventors have now discovered that the combination of a first rubber comprising an styrene-isoprene-styrene ("SIS") copolymer (particularly at a weight ratio ranging from 4:1 to 1:4), a second rubber comprising a styrene-butadiene ("SB") copolymer, specific tackifiers, e.g., hydrocarbon and rosin resins, and a sulfur free phenolic derivative curing agent in specific proportions surprisingly yields a high performance reactive PSA ("HPR-PSA"). This HPR-PSA demonstrates a unique combination of performance characteristics, e.g., stainless steel peel strength and/or lap shear. Without being bound by theory, it is believed that the (at least) two specific rubbers, at a specific weight ratio, react with the particular curing agent such that it achieves viscoelastic property that is optimal for PSA application. SIS possesses higher glass transition temperature ("Tg") than SB. SIS provide higher cohesion and SB provides better low temperature usability and die cutting properties. The combination of SIS copolymer and SB copolymer in proportional amounts imparts desired viscoelastic property which is helpful to PSA application. The resultant HPR-PSA can be easily applied, e.g., in a manner that is suitable for applying solvent borne PSA, to any facestock to produce a label, and the label so produced has excellent adhesion performance, removability and repositionability. Unlike a typical hotmelt, when the HPR-PSA/label are heated to or above a threshold ("triggering temperature"), the curing agent present in the PSA crosslinks the base copolymers and permanently adheres the label to the substrate. The cured HPR-PSA becomes a structural adhesive. As a result, the cured label exhibits superior mechanical properties such as superior strong static shear, storage modulus, and peel strength.

The inventors have also found that the use of phenolic derivatives at an amount within certain ranges as curing agents unexpectedly provide for a higher triggering temperature as compared to other type of curing agent. As compared to conventional PSAs containing curing agent, where the HPR-PSA is crosslinked during the coating process, which is typically performed at a temperature of 110°C or less, the special formulation of the HPR-PSA disclosed in this application allows a formation of stable HPR-PSA-facestock laminate while the HPR-PSA remains substantially uncrosslinked. Only when the HPR-PSA is exposed at a high temperature that is typical for normal vulcanization condition (160-200°C), the curing reaction will be triggered. Thus, the higher triggering temperature ensures the stability of the HPR-PSA, i.e, the adhesive curing reaction may occur during vulcanization, and will not occur during the compounding or coating process or in storage.

Further, in forming the label, the use of the specific components in the HPR-PSA advantageously provides for a coated adhesive in which the copolymers do not (substantially) crosslink upon application to the facestock, i.e., the copolymers remain substantially uncrosslinked. This benefit is important because it allows the crosslinking to occur at a later point, e.g., when the label is applied to a desired substrate, and the crosslinking occurs between the label and the substrate, which provides for a superior bond to the substrate. In conventional products, the crosslinking occurs during application to the facestock, which has little or no effect on the strength of the bond of the label to the desired substrate. It will be appreciated by those skilled in the art that the term "substantially uncrosslinked" is used herein to refer to relatively lowly crosslinked copolymers, e.g., the status of SIS and SB copolymers before the curing reaction. For example, substantially uncrosslinked copolymers may refer to a copolymer resin, in which less than less than 5 wt%, less than 3 wt%, or less than 2 wt% of the copolymers are crosslinked. For purpose of this disclosure, the term "crosslinked" refers to the status of the SIS and SB copolymers after the curing reaction is initiated, in which at least 15 wt%, at least 18 wt%, or at least 20 wt%, or at least 24 wt%, at least 30 wt%, or at least 40 wt%, or at least 41.3 wt% of the copolymers are crosslinked.

### Polymer/Copolymer

The (co)polymers of the high performance reactive PSA ("HPR-PSA") comprise a styrene-isoprene-styrene copolymer (SIS block copolymer) and a styrene-butadiene copolymer (SB block copolymer), where "S" denotes a polymerized segment or "block" of styrene monomers, "I" denotes a polymerized segment or "block" of isoprene monomers, and "B" denotes a polymerized segment or "block" of butadiene monomers.

The inventors have found that the unique proportional combination of SIS and SB copolymers in the HPR-PSA contributes to balanced properties of mechanical performance, such as peel and static shear. The unique proportional combination of the copolymers and the curing agent contributes to curing properties and thus the reactivity. For example, the SIS copolymer in the adhesive beneficially can be easily tackified and can contribute excellent adhesion performance to the adhesive..

SB has acceptable mechanical performance and imparts HPR-PSA with good low temperature usability due to the lower Tg and die cutting property. SB copolymer is also relatively inexpensive, as compared to SIS, but has the drawbacks of being easily oxidized and difficult to tackify. Adhesives having excessive SB copolymer could also exhibit poor resistance to chemicals and oil substances and the inability of withstanding long-time exposure to sunlight ozone and heat. As noted above, the combination of these specific copolymers at the specific weight ratio provides for a unique combination of performance characteristics.

The molecular weight of the SIS may also impact the adhesion performance. It is postulated that the higher molecular weight and/or the higher the styrene content surprisingly improves adhesion performance it would possess. In one embodiment, the molecular weight of the SIS copolymer ranges from 7,000-400,000 g/mole, e.g., from 70,000-300,000 g/mole, or from 100,000-300,000 g/mole. In terms of upper limits, the SIS copolymer can have a molecular weight less than 400000 g/mole, e.g., less than 300000 g/mole, less than 100000 g/mole. In terms of lower limits, the SB copolymer can have a molecular weight greater than 7000 g/mole, greater than 8000 g/mole, greater than 10000 g/mole, or greater than 20000 g/mole.

It is believed that styrene, when present in amounts within certain ranges, can impart the HPR-PSA with optimal pre-cure peel and static shear strength. Increasing the styrene content can enhance the tensile strength post-cure, but too much styrene will sacrifice the pressure sensitive properties for the pre-cure HPR-PSA, wherein the HPR-PSA remains substantially uncrosslinked. In one embodiment, the SIS copolymer has a styrene content ranged from 10 wt% to 50 wt%, e.g., from 15 wt% to 30 wt%, from 20 wt% to 30 wt%, from 16 wt% to 25 wt%, or from 18 wt% to 20 wt%, based on the weight of the SIS copolymer. In terms of upper limits, the styrene content in the SIS copolymer can be less than 30 wt%, e.g., less than 26 wt%, or less than 25 wt%. In terms of lower limits, the styrene content in the SIS copolymer can be greater than 8 wt%, e.g., greater than 10 wt%, or greater than 16 wt%.

The SB copolymer used in this invention typically has a molecular weight ranged from 7000 g/mole to 400000 g/mole, more preferably from 70000 g/mole to 300000 g/mole, or from 100,000 g/mole to 300,000 g/mole. In terms of upper limits, the SB copolymer can have a molecular weight less than 400,000 g/mole, e.g., less than 300,000 g/mole, less than 100,000 g/mole. In terms of lower limits, the SB copolymer can have a molecular weight greater than 7000 g/mole, greater than 8,000 g/mole, greater than 10,000 g/mole, or greater than 20,000 g/mole.

In some embodiments, the styrene content of the SB copolymer can range from 10 wt% to 50 wt%, from 15 wt% to 30 wt%. e.g., from 20 wt% to 30 wt%, from 16 wt% to 25 wt%, or from 18 wt%-20 wt% based on the weight of the SB copolymer. In terms of upper limits, the styrene content of the SB copolymer can be less than 35 wt%, e.g., less than 30 wt%, less than 25 wt%, or less than 20 wt%. In terms of lower limits, the styrene content of the SB copolymer may be greater than 5 wt%, e.g., greater than 10 wt%, greater than 15 wt%, or greater than 17 wt%.

According to the claimed invention, the weight ratio of SIS tri-block copolymer to SB di-block copolymer ranges from 4:1 to 0.25:1, e.g., from 4:1 to 0.33:1, from 3:1 to 0.67:1, or about 1.5:1. According to the claimed invention, the SIS copolymer content ranges from 10 wt% to 50 wt%, e.g., from 18 wt% to 40 wt% based on the total weight of the adhesive, e.g., from 20 wt% to 35 wt%, from 25 wt% to 35 wt%, from 20 wt% to 25 wt%, from 35 wt% to 40 wt%, or from 22 wt% to 35 wt%, e.g., about 22.6 wt%. In terms of upper limits, the SIS copolymer content is at most 50 wt%, and can be less than 40 wt%, e.g., less than 38 wt%, less than 37 wt%, less than 36 wt%, less than 35 wt%, less than 32 wt%, less than 31 wt%, less than 29 wt%, less than 28 wt%, less than 27 wt%, or less than 25 wt%. In terms of lower limits, the SIS copolymer content is at least 10 wt%, and can be at least 15 wt%, at least 20 wt%, at least 25 wt%, at least 30 wt%, or at least 35 wt%.

According to the claimed invention, the SB copolymer content ranges from 10 wt% to 50 wt%, e.g., 10 wt% to 25 wt%, from 10 wt% to 30 wt%, from 10 wt% to 25 wt%, from 15 wt% to 20 wt%, from 12 wt% to 18 wt%, from 13 wt% to 20 wt%, or about 15.2 wt%. In terms of upper limits, the SB copolymer is at most 50 wt%, and can be e.g. less than 45 wt%, less than 40 wt%, less than 35 wt%, less than 30 wt%, less than 25 wt%, less than 20 wt%, less than 18 wt%, less than 17 wt%. In terms of lower limits, the SB copolymer content is at least 10 wt%, and can be greater than 12 wt%, greater than 13 wt%, greater than 14 wt%, or greater than 15 wt%.

### Tackifier

The HPR-PSA of the invention comprises a tackifier. The tackifier may have a particular compatibility with the base copolymers SIS and SB, e.g., a synergistic combination that contributes to the tack and adhesion properties of the adhesive. The inventors have discovered that, hydrocarbon resin and rosin resin, when used at certain weight ratios, offer an advantageous balance of adhesive properties and provide for adhesion improvements between SIS and SB copolymers.

Hydrocarbon resins are often thermoplastic resins that promote adhesion and tack in pressure sensitive adhesives. Hydrocarbon tackifiers are made from petroleum based feedstocks such as aliphatic hydrocarbon resin having five carbon atoms (C5), aromatic hydrocarbon resin having nine carbon atoms (C9), dicyclopentadiene (DCPD), Wingtack 10 (a C5 hybrocarbon resin), C6100 (a mixture of C5 and C9 hydrocarbon resin), or mixtures thereof. Hydrocarbon resins have been found to demonstrate good solubility and compatibility with the base copolymer. Hydrocarbon resins also provide the benefit of allowing the adhesive to work well on low surface energy substrate.

In some embodiments, the amount of hydrocarbon resin in the adhesives ranges from, based on the total weight of the adhesive, e.g., 2% to 45%, 5 wt% to 40 wt% from 10 wt% to 30 wt%, e.g., from 20 wt% to 40 wt%, e.g., about 39 wt%. In terms of upper limits, the amount of hydrocarbon resin in the adhesive can be less than 45 wt%, e.g., less than 40 wt%, less than 35 wt%, less than 30 wt%, based on the total weight of the adhesive. In terms of lower limits, the amount of hydrocarbon resin in the adhesive can be greater than 10 wt%, e.g., greater than 15 wt%, greater than 20 wt%, greater than 30 wt%, based on the total weight of the adhesive.

Suitable commercial hydrocarbon resins include T-500 or TD-110 from Rayton, Piccotac 1095 or Piccotac 1100 from EASTMAN.

Rosin resins are the thermoplastic ester resins produced by reacting rosin acid with alcohol. They are typically derived from either aged tree stumps (wood rosin), sap (gum rosin), or by-products of the paper making process (tall oil rosin) and they impart excellent, aggressive adhesion to all polymer types. Non-limiting examples of rosin include glycerol ester and pentaerythritol esters.

The inventors have found that the presence of rosin resin in the HPR-PSA contributes to the stability and longevity properties of the adhesive, however excessive amount of rosin resin increases the chance of damaging the hard domains comprising the styrene groups in the SIS or SB copolymer and thus reducing the shear strength of HPR-PSA. In preferred embodiments, the rosin resin is present in an amount ranging from, based on the total weight of the adhesive, e.g., from 1 wt% to 45 wt%, from 5 wt% to 40 wt%, from 10 wt% to 25 wt%, from 10 wt% to 20 wt%, e.g., about 17 wt%. In terms of upper limits, the amount of rosin may be less than 40 wt%, less than 25 wt%, or less than 20 wt%. In terms of lower limits, the amount of rosin may be greater than 5 wt%, e.g., greater than 10 wt%, greater than 15 wt%, or greater than 16 wt% based on the total weight of the adhesive.

Suitable commercial rosin resins include GA100F, GB75 GA90 GA85, or GB100 from ARAKAWA.

The inventors of the application have discovered that combining hydrocarbon and rosin tackifiers at ratios within a particular range provides for desired stability, longevity, and adhesion performance. According to the claimed invention, the weight ratio of hydrocarbon resin to rosin resin is from 5:1 to 1:5. In some embodiments, the weight ratio of the hydrocarbon resin to rosin resin ranges e.g., from 5:1 to 0.2:1, from 3:1 to 0.33:1, between 1:1 to 3:1, or between 2:1 and 0.5:1, e.g., about 2.3:1. In terms of upper limits, the weight ratio of hydrocarbon resin to rosin resin is at most 5:1, e.g. less than 4:1, less than 3:1, or less than 2.5:1. In terms of lower limits, the weight ratio of hydrocarbon resin to rosin resin is at least 0.2:1, e.g. greater than 0.25:1, or greater than 0.33:1.

The amount of total tackifier present in the HPR-PSA ranges from 10 wt% to 75 wt%, e.g., from 40 wt%-75 wt%, from 20 wt% to 70 wt%, from 40 wt% to 65 wt%, e.g., about 56.2 wt%, based on the total weight of the adhesive. In terms of upper limits, the amount of total tackifier is at most 75 wt%, and may be less than 70 wt%. In terms of lower limits, the amount of total tackifier may be greater than 20 wt%, e.g., greater than 30 wt%, greater than 40 wt%, or greater than 45 wt%, based on the total weight of the adhesive.

According to the claimed invention, the weight ratio of SIS to SB ranges from 4:1 to 0.25:1. In some embodiments, the weight ratio of the base copolymers, e.g., SIS and SB copolymers, ranges e.g., from 0.25:1 to 4:1, from 0.33:1 to 3.5:1, from 0.5:1 to 3:1, or from 1:1 to 3:1. In terms of upper limits, the weight ratio of tackifiers to base copolymers is at most 4:1, e.g., less than 3:1, or less than 2:1. In terms of lower limits, the weight ratio of tackifiers to base copolymers is at least 0.25:1, e.g. greater than 0.33: 1.

### Curing agent

The HPR-PSA comprises a curing agent comprising phenolic resin comprising one or more phenolic derivatives. Phenolic resins have been found to have good chemical resistance and adhesion to substrates and when properly formulated phenolic resins can retain properties at elevated temperatures. In preferred embodiments, the curing agent used in the HPR-PSA comprises bromized alkyl phenol formaldehyde. In some embodiments, the curing agent comprises a mixture of alkyl phenol formaldehyde and bromized alkyl phenol formaldehyde.

According to the claimed invention, the curing agent is essentially free of sulfur. Using sulfur-free curing agent has been found to be surprisingly beneficial because it avoids the contamination problem caused by using sulfur based phenolic derivatives. In some embodiments, the curing agent comprises bromized phenol formaldehyde.

In preferred embodiments, the curing agent used in the HPR-PSA comprises methylol groups. The amount of methylol groups in the curing agent is directly correlated with the level of crosslinking density. A high methylol content however may cause it harder to solidify. The inventors of the application discovered surprisingly methylol group content within a defined range offers the optimum crosslinking densities and impart the desired adhesion and mechanical performance. For example, the methylol content in the curing agent used in the disclosed HPR-PSA may range from 5 wt% to 18 wt%, e.g., from 7 wt% to 15 wt%, 7 wt% to 13 wt%, from 10 wt%-13 wt%, from 8 wt% to12 wt%, from 9 wt% to 13 wt%, or from 9 wt% to 11 wt%, based on the total weight of the curing agent in the HPR-PSA. In terms of upper limits, the methylol content in the curing agent used in the disclosed HPR-PSA is less than 15 wt%, e.g., less than 13 wt%. In terms of lower limits, the methylol content in the curing agent used in the disclosed HPR-PSA is greater than 7 wt%, e.g., greater than 8 wt%, or greater than 9 wt%. In a particular embodiment, the phenolic resin used as the curing agent is SP1056.

According to the claimed invention, the amount of curing agent in the HPR-PSA ranges, based on the total weight of the HPR-PSA, from 1.0 wt% to 15 wt%, e.g. from 2.5 wt% to 8.0 wt%, from 3.5 wt% to 8.0 wt%, from 4 wt% to 7.0 wt%, from 5 wt% to 10.0 wt%, or from 4.5 wt% to 7.0 wt%, e.g., about 5.7 wt%. In terms of upper limits, the amount of curing agent is at most 15.0 wt%, e.g. less than 10.0 wt%. In terms of lower limits, the amount of curing agent is at least 1.0 wt%, e.g. greater than 1.3 wt%, or greater than 1.5 wt%.

The curing agent disclosed herein can cure the base copolymers under broad conditions. The HRP-PSA having the curing agent disclosed herein typically becomes reactive when the temperature is above a threshold of temperature, commonly referred to as triggering temperature. In practice, curing occurs after the HPR-PSA is assembled into a label with other layers and the resulted layer is attached to a substrate, for example, a tire. In some embodiments, the triggering temperature for curing ranges from 135°C to 200°C, e.g., 135°C to 180°C, e.g., from 160°C to 180°C, from 145°C to 175°C, from 150°C to 200°C or from 155°C to 185°C. In terms of upper limits, the triggering temperature can be less than 200°C, e.g., less than 195°C, less than 185°C, or less than 180°C. In terms of lower limits, the triggering temperature can be greater than 120°C, greater than 125°C, or greater than 130°C. In general, exposing adhesives in excessive high temperature for an extended period of time may cause excessive crosslinking or degradation of the adhesive. Excessive crosslinking would undermine the mechanical properties of the HPR-PSA, as shown by a reduction of storage modulus. This curing agent disclosed herein, e.g., a (bromized) alkyl phenol formaldehyde, can crosslink base copolymers under a broad range of temperatures and lengths of the period of time without causing excessive crosslinking. For example, the HPR-PSA can be cured at 155°C to 185°C for 10-30 minutes and still retain good storage modulus. In terms of upper limits, the time period for curing is less than 60 min, e.g., less than 40 min, or less than 30 min. In terms of lower limits, the time period for curing is greater than 5 min, e.g., greater than 8 min, greater than 12 min. In some embodiments, the HPR-PSA can be cured at 160°C for 10 minutes, or 185°C for 20 minutes, and retains good mechanical properties required for a structure adhesive.

### Production of the HPR-PSA

The HPR-PSA can be produced by mixing in proper solvent various components disclosed above, e.g., the SIS, SB copolymers, the tackifiers and curing agent, to produce an adhesive solution. This process is commonly referred to as compounding. The compounding can occur under a temperature that is less than 50°C, e.g., between 20°C and 40°C, or between 20°C and 30°C, or under any temperature below the triggering temperature for curing.

Solvents that are suitable for dissolving the components of the HPR-PSA include, but are not limited to, aromatic solvents, Ketones, aliphatic solvents and ester solvents. Such solvents may include ketones of from 3 to 15 carbon atoms (e.g., methyl ethyl ketone or methyl isobutyl ketone), alkylene glycols and/or alkylene glycol alkyl ethers having from 3 to 20 carbon atoms, acetates and their derivatives, ethylene carbonate, and other suitable solvents. Suitable alcohol solvents include mono-alcohols, such as methyl, ethyl, propyl, butyl alcohols, as well as cyclic alcohols such as cyclohexanol. In certain embodiments, a variety of acetate-type solvents may be used, such as n-butyl acetate, n-propyl acetate, and other acetate-type solvents. In preferred embodiments, the solvents are aromatic solvents. In certain embodiments, a portion of the solvent system may include water. In other embodiments, however, the solvent system may be devoid of water.

The amount of solvent(s) used for producing the HPR-PSA solution may vary depending on the desired viscosity. Typically the solvent is present in the HPR-PSA solution in an amount ranging from 25 wt% to 70 wt%, e.g., from 30 wt% to 65 wt%, from 40 wt% to 70 wt%, from 50 wt% to 70 wt%. In terms of lower limits, the solvent is present in an amount of greater than 30 wt%, greater than 40 wt%, greater than 50 wt%, or greater than 55 wt%, greater than 60 wt%, or about 58 wt%, based on the total weight of the HPR-PSA solution. In terms of upper limits, the solvent is present in an amount of less than 75 wt%, less than 70 wt%, or less than 65 wt%, based on the total weight of the HPR-PSA solution.

The HPR-PSA (and the adhesive solution thereof) can be used in a variety of applications. For example, it can be coated on a facestock, which is then processed and manufactured into labels. In some cases, it is used as a transfer adhesive without being associated with a facestock.

The HPR-PSA solution as prepared above has good coatability, with a typical viscosity of 0.100-5.000 Pa·s (100-5,000cps), e.g., 0.200-4.000 Pa·s (200-4,000 cps), 0.300-3.000 Pa·s (300-3,000 cps), 0.400-2.000 Pa·s (400-2,000 cps), 0.300-0.600 Pa·s (300-600 cps), or about 0.500 Pa·s (500cps). In terms of lower limits, the viscosity is greater than 0.100 Pa·s (100cps), e.g., greater than 0.200 Pa·s (200 cps), greater than 0.300 (300 cps), or greater than 0.400 Pa·s (400 cps). In terms of upper limits, the viscosity is less than 5.000 Pa·s (5,000cps), less than 4.000 Pa·s (4,000 cps), less than 2.000 Pa·s (2,000 cps), less than 1.000 Pa·s (1,000 cps). Methods for measuring viscosity are well known, for example using the Brookfield Viscometer method, testing the flow resistance of the fluid by low and medium rate rotation.

Non-limiting examples of facestock that can be used include tissue, paper and film, e.g., a PET film, a polypropylene film, a Poly-vinyl Chloride film, a polyimide film, a polyethylene terephthalate film, a olefin film or a polyolefin film. In some embodiments, facestock used with the HPR-PSA are obtained from commercial sources, such as those available from Loparex, including products such as 1011, 22533 and 1 1404, CP Films, and Akrosil^{™}.

### Coating

The HPR-PSA solution can be coated to a facestock using methods that are well known for solvent based adhesive, for example, as disclosed in *Manufacturing Pressure-Sensitive Adhesive Products: A Coating and Laminating Process,* available at www.adhesivesmag.com/articles/86079-manufacturing-pressure-sensitive-adhesive-products-a-coating-and-laminating-process. The facestock that has been coated with the wet adhesive is then baked at a temperature to allow the solvent to evaporate. Preferably, the drying temperature for drying is lower than the curing triggering temperature to prevent crosslinking from occurring during the drying process.

In some embodiments, the coating is performed by direct coating, in which the pressure-sensitive adhesive is coated directly onto the facestock or backing material. In some embodiments, the coating is performed by transfer coating, in which the adhesive is first coated onto a release coated liner and transferred to the facestock or backing during the facestock/backing-to-liner lamination process.

Because of the unique composition of the HPR-PSA or a solution thereof, higher drying temperatures may be utilized without crosslinking the copolymers., which ultimately provides for superior label-substrate adhesion performance. In some embodiments, the drying temperature is no greater than 110°C, no greater than 105°C, or no greater than 100°C.

The inventors of the application have also discovered having a high solid content, for example at least 25%, e.g., at least 30%, at least 35%, at least 40%, at least 45% or at least 50%, is beneficial because it allows for efficient drying. The HPR-PSA solution of this disclosure may in some embodiments have a solid content that ranges from 30 wt% to 75 wt%, e.g., from 35 wt% to 70 wt%, from 30 wt% to 60 wt%, from 20 wt% to 50 wt%, or from 30 wt% to 55 wt% based on the total weight of the HPR-PSA solution. In terms of lower limits, the solid content of the HPR-PSA solution is greater than 20 wt%, greater than 30 wt%, greater than 35 wt%, greater than 40 wt%, or greater than 50 wt%. In terms of upper limits, the solid content of the HPR-PSA solution is less than 70 wt%, less than 65 wt%, less than 60 wt%, less than 55 wt%, or less than 50 wt%. In one embodiment the solid content of the HPR-PSA solution is about 42 wt%.

### Curing

Optionally, additional layers, such as primers and liners, can be assembled with the facestock coated with the HPR-PSA to form a label. The label can then be attached to suitable substrates, such as tires. In some embodiments, the label is exposed to high temperature for a period of time for curing, i.e., crosslinking of the base copolymers, to occur. In some embodiments, the label is treated at 155°C - 185°C for 10-30 min. In some embodiments, the label is treated at 160°C for 10 min or at 170°C for 10 min. In some embodiments, the curing occurs at 185 °C for 20 min.

### Performance Characteristics

The HPR-PSA in this disclosure shows good adhesion performance, mechanical performance, repositionability and removability before curing. In some embodiments, the HPR-PSA may demonstrate a 180°C peel strength that ranges from 0.2 Newton/millimeter (5 Newton/inch) to 1.2 Newton/millimeter (30 Newton/inch) according to the FINAT-1 method (2016), e.g., from 0.3 Newton/millimeter (8 Newton/inch) to 0.59 Newton/millimeter (15 Newton/inch), or from 0.2 Newton/millimeter (6 Newton/inch) to 0.47 Newton/millimeter (12 Newton/inch). In terms of lower limits, the HPR-PSA can demonstrate a peel strength of greater than 0.2 Newton/millimeter (5 Newton/inch), e.g., greater than 0.2 Newton/millimeter (6 Newton/inch), greater than 0.3 Newton/millimeter (8 Newton/inch). greater than 0.39 Newton/millimeter (10 Newton/inch), greater than 0.47 Newton/millimeter (12 Newton/inch), greater than 0.59 Newton/millimeter (15 Newton/inch). In terms of upper limits, the HPR-PSA can demonstrate a peel strength of less than 3.94 Newton/millimeter (100 Newton/inch), e.g., less than 3.1 Newton/millimeter (80 Newton/inch), or less than 2.8 Newton/millimeter (70 Newton/inch).

In one embodiment, the HPR-PSA demonstrates a sheer strength ranging from 1,000 min to 50,000 min on stainless steel before curing as measured using the FINAT-8 method (2016), e.g., from 8,000 min to 12,000 min, or from 9,000 min to 11,000 min. In terms of upper limits, the HPR-PSA can demonstrate a sheer strength of less than 18,000 min less than 15,000 min, less than 14,000 min, or less than 12,000 min. In terms of lower limits, the HPR-PSA can demonstrate a sheer strength of greater than 5,000 min, greater than 8,000 min, greater than 9,000 min, or greater than 10,000 min.

In some cases, the HPR-PSA demonstrates a storage modulus ranging from 6,000 Pa to 100,000 Pa at 25°C, e.g., 7,000 Pa to 60,000 Pa, or from 8,000 Pa to 50,000 Pa, or from 9,000 Pa to 30,000 Pa, or from 9,000 Pa to 12,000 Pa, or about 10,500 Pa before curing. In terms of upper limits, the HPR-PSA may demonstrate a storage modulus of less than 100,000 Pa, e.g., less than 30,000 Pa. or less than 20,000 Pa when measured at 25°C. In terms of lower limits, the HPR-PSA may demonstrate a storage modulus of greater than 6,000 Pa, e.g., greater than 7,000 Pa. or greater than 9,000 Pa before curing. When tested at 170°C, the HPR-PSA may demonstrate a storage modulus ranging from 100 Pa to 1,000Pa, e.g., 300 Pa to 900 Pa, 400 Pa to 800 Pa, 450 Pa to 600 Pa, e.g., about 490 Pa. In terms of lower limits, the HPR-PSA may demonstrate a storage modulus at 170°C of greater than 100 Pa, 200 Pa, 300 Pa, or 400 Pa. In terms of upper limits, the HPR-PSA may demonstrate a storage modulus at 170°C of less than 1,500 Pa, 1,000 Pa, 800 Pa, or 700 Pa.

The HPR-PSA may demonstrate a lap shear ranging from 0.05 MPa to 0.5 MPa, e.g., from 0.08 Mpa to 0.3 MPa, or from 0.05 MPa to 0.2 MPa or from 0.10 MPa to 0.15 MPa, or about 0.12 MPa on stainless steel before curing. In terms of upper limits, the HPR-PSA may demonstrate a lap shear of less than 2 MPa, e.g., less than 1.0 MPa. or less than 800 Pa. In terms of lower limits, the HPR-PSA may demonstrate a lap shear of greater than 0.05 MPa, e.g., greater than 0.08 MPa. or greater than 0.11 MPa before curing.

In some cases, the HPR-PSA demonstrates a D-shear strength ranging from 0.39 to 3.94 Newton/millimeter (10 Newton/inch to 100 Newton/inch), from 0.79 to 3.94 Newton/millimeter (20 Newton/inch to 100 Newton/inch), from 2.0 to 3.94 Newton/millimeter (50 Newton/inch to 100 Newton/inch), from 1.6 to 3.1 Newton/millimeter (40 Newton/inch to 80 Newton/inch), or about 2.4 to 3.5 Newton/millimeter (60 Newton/inch to 90 Newton/inch), or about 3.5 Newton/millimeter (89 Newton/inch) before curing. In terms of upper limits, the HPR-PSA can demonstrate a D-shear strength of less than 11.8 Newton/millimeter (300 Newton/inch), less than 7.87 Newton/millimeter (200 Newton/inch), less than 5.91 Newton/millimeter (150 Newton/inch), or less than 4.72 Newton/millimeter (120 Newton/inch). In terms of lower limits, the HPR-PSA can demonstrate a D-shear strength of greater than 0.39 Newton/millimeter (10 Newton/inch), greater than 1.2 Newton/millimeter (30 Newton/inch), or greater than 1.6 Newton/millimeter (40 Newton/inch), or greater than 2.0 Newton/millimeter (50 Newton/inch).

The HPR-PSA is transformed into a structure adhesive upon curing at the conditions as described above. In some cases, the HPR-PSA is part of a label and the label is then permanently adhered to the substrate once the HPR-PSA is cured. The cured HPR-PSA is crosslinked and generally exhibits significantly increased storage modulus and lap shear strength as compared to the HPR-PSA having the same compositions and having not been cured. In some cases, curing may increase the storage modulus of the HPR-PSA by at least 4 times, e.g., at least 5 times, at least 7 times, at least 8 times, at least 9 times, at least 10 times and the lab shear on stainless steel also increased at least 2 times, e.g., at least 5 times, at least 7 times, at least 8 times, at least 9 times, at least 10 times or at least 12 times, or at least 15 times relative to the storage modulus of the HPR-PSA that has not being cured. In some cases, the cured HPR-PSA shows a storage modulus of at least 500 Pa at 170°C, e.g., at least 600 Pa, at least 1000 Pa, at least 1500 Pa, at least 2000 Pa, at least 2400 Pa, or about 2490 Pa. In some cases, the cured HPR-PSA exhibits a lap shear of at least 1.0 MPa, at least 1.20 MPa, at least 1.50 MPa, or at least 1.12 MPa on stainless steel. When measured at 25°C, the cured HPR-PSA may demonstrate a storage modulus ranging from 100,000 Pa to 900,000 Pa, e.g., from 150,000 Pa to 600,000 Pa, from 200,000 to 500,000 Pa, or about 239,000 Pa.

In some cases, after curing, for example, at 135°C -180°C for 10-30 min, the cured HPR-PSA may demonstrate a D-shear strength ranging from 15.7 to 78.74 Newton/millimeter (400 Newton/inch to 2,000 Newton/inch), from 19.7 to 59.06 Newton/millimeter (500 Newton/inch to 1,500 Newton/inch), from 11.8 to 70.87 Newton/millimeter (300 Newton/inch to 1800 Newton/inch), from 15.7 to 62.99 Newton/millimeter (400 Newton/inch to 1,600 Newton/inch), or about 19.7 to 55.12 Newton/millimeter (500 Newton/inch to 1,400 Newton/inch), e.g., about 47.24 Newton/millimeter (1200 Newton/inch). In terms of upper limits, the HPR-PSA can demonstrate a D-shear strength of less than 78.74 Newton/millimeter (2,000 Newton/inch), less than 39.37 Newton/millimeter (1,000 Newton/inch), less than 35.4 Newton/millimeter (900 Newton/inch), or less than 31.5 Newton/millimeter (800 Newton/inch). In terms of lower limits, the HPR-PSA can demonstrate a D-shear strength of greater than 3.94 Newton/millimeter (100 Newton/inch) after curing, e.g., greater than 11.8 Newton/millimeter (300 Newton/inch), or greater than 15.7 Newton/millimeter (400 Newton/inch), or greater than 19.7 Newton/millimeter (500 Newton/inch).

Methods for measuring storage modulus, the lap shear, steel peel strength, shear strength, Dynamic shear ("D-shear") are also well known, for example, D-shear can be measured according to FINAT FTM-18 method (2016); the 180°C peel strength can be measured according to the FINAT FTM-1 (2016) method, shear strength can be measured according to on the FINAT FTM-8( 2016) method; and lap shear can be measured according to the ASTM D1002 (2016) method. Storage modulus can be measured using rheology analysis of TA Rheometer using the temperature ramp mode. In general, storage modulus measurements negatively correlate with the temperature under which the test is performed; for the PSAs having identical compositions, the higher the temperature the lower value of the storage modulus measurement. In some instances, storage modulus of the HPR-PSA is tested at 25°C. In some embodiments, storage modulus is tested at 170°C.

### EXAMPLES

### Example 1

An HPR-PSA solution was prepared by dissolving in solution the component listed below:

**Table 1. HPR-PSA solution components**

| Component (Manufacturer) | Weight amount | Weight percentage |
|---|---|---|
| QUINTAC 3270 SIS (ZEON Chemical) | 9.6 | 22.6% |
| KIBIPOL PR-1205 SB (CHIMEI) | 6.4 | 15.2% |
| Wingtack 10 (hydrocarbon resin) (Cray Valley) | 7.6 | 18.1% |
| Toluene (solvent) | 58 | - |
| Regalite C6100 (hydrocarbon resin ) (Eastman) | 8.8 | 21.0% |
| GA100F (rosin resin) (ARAKAWA) | 7.2 | 17.1% |
| Phenolic resin SP1056 (SI Group) | 2.4 | 5.7% |

The curing agent used in the HPR-PSA, SP1056, is bromized alkyl phenol formaldehyde and has a methylol group content of 9-11%. The HPR-PSA solution prepared above had a viscosity of 0.500 Pa·s (500 cps) at 25°C and had solid content of 42 wt%. The HPR-PSA was coated on 120 um PET film and dried at a temperature of lower than 110°C to produce HPR-PSA labels.

The labels were tested for 180°C peel strength on stainless steel at 23°C, 50% humidity according to FINAT FTM-1, with a balance time being 20 min and the width of the label being 25.4 mm (1 inch) and the peel rate being 300 mm/min. The balance time refers to the time of the label adhereing on the substrate during the testing.

The shear strength on stainless steel was measured at 23 °C, 50% humidity according to on the FINAT FTM-8 (2016) method with a balance time being 15 minutes and the width of the label being 12.7 mm (0.5 inch).

D-shear was measured at 23°C, 50% humidity according to FINAT FTM-18 (2016) with a balance time being 20 minutes, the width of label being 12.7 mm (0.5 inch), and the peel rate being 5mm/min.

Lap shear was measured at 23°C, 50% humidity according to the ASTM D1002 (2016) method. Two metal plates, with a thickness of 1.62 mm and an overlap of 12.7 mm (0.5"), were bonded with adhesive at testing. The adhesive specimen was 25.4 mm (1") wide.

Storage modulus was measured using rheology analysis of TA Rheometer using the temperature ramp mode. The temperature ramped from -50°C to 120 °C with 3 °C /min heating rate and the angular frequency was 10 rad/s.

The label demonstrated a 180°C peel strength of 0.650 Newton/millimeter (16.5 Newton/inch) on stainless steel, and a shear strength above 10000 min, and a D- shear strength of 3.5 Newton/millimeter (89 Newton/inch) on stainless steel.

The HPR-PSA label was then cured at 160°C for 10 min and tested for D-shear strength. The cured HPR-PSA demonstrated a D-shear strength of 47.24 Newton/millimeter (1200 Newton/inch), significantly higher than those of the PSA before the curing. Likewise, the measurement of lap shear was increased to1.12 MPa and storage modulus were also significantly increased to 239,000 Pa when measured at 25°C. The comparison of the HPR-PSA before and after curing is shown in Table 2. The results indicate curing the HPR-PSA having the disclosed composition resulted in significant improvement in mechanical performance.

**Table 2. Performance characteristics of the HPR-PSA before and after curing**

| | Before curing | After curing at 160°C for 10 min |
|---|---|---|
| Lap shear strength (MPa) | 0.12 | 1.12 |
| D-shear (Newton/mm [Newton/inch]) | 3.5 (89) | 47.24 (1200) |
| Storage modulus (Pa) | 10500(25°C) | 239000(25°C) |
| 180°C peel strength (Newton/mm [Newton/inch]) | 0.650 (16.5) | - |
| Shear strength (min) | above 10,000 | - |

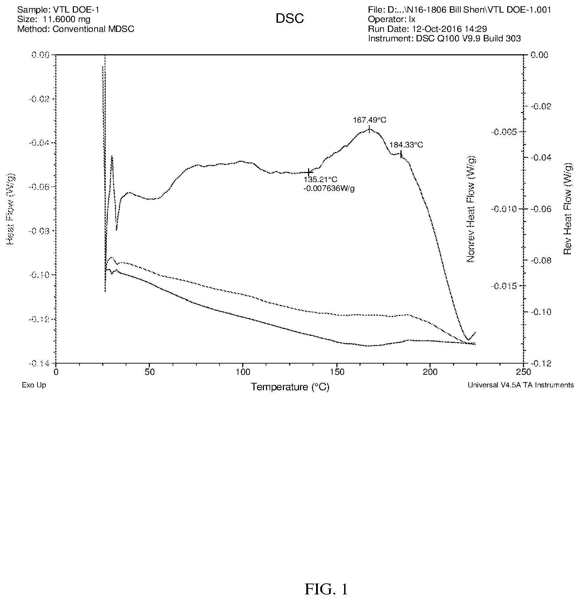

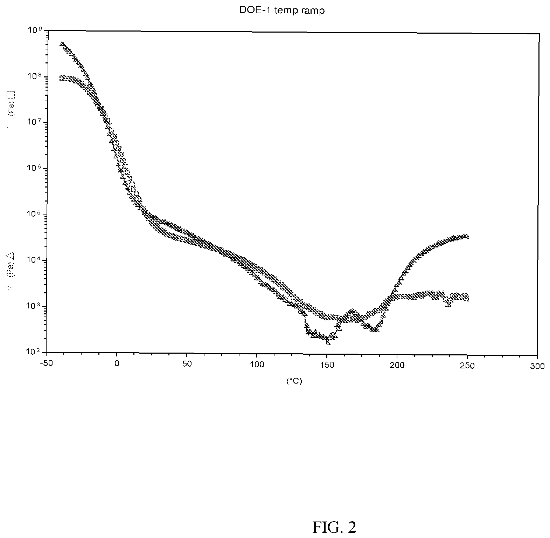

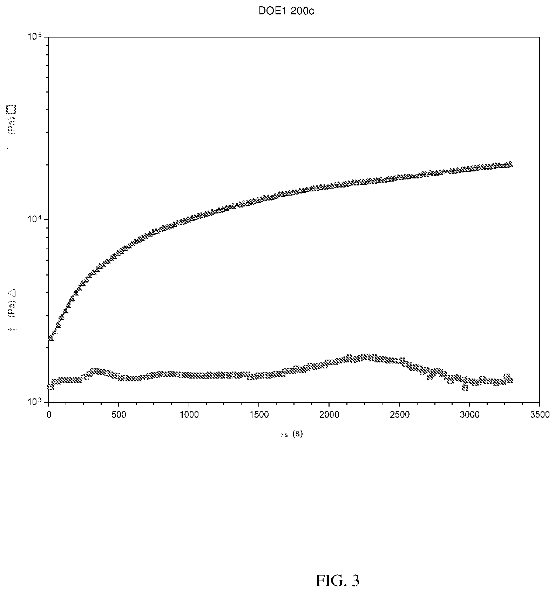

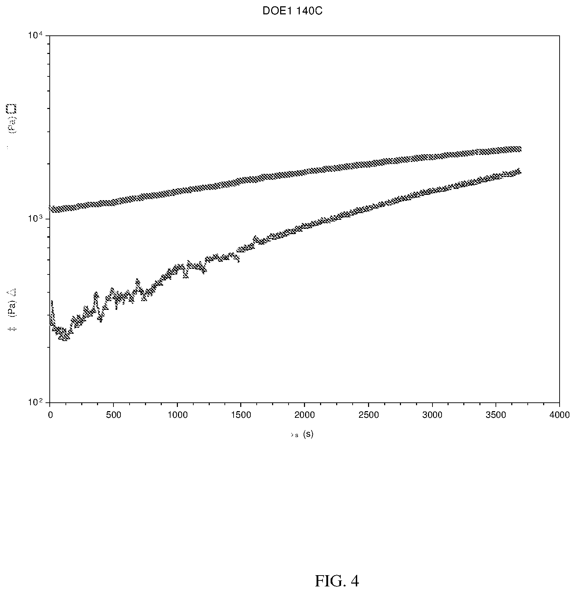

Figure 1 shows results of the DSC analysis which indicates that the trigger temperature for curing was around 135 °C, where an exothermic peak started to form as the temperature increases. Figure 2 shows results from rheology analysis by temperature ramp, which shows that the storage modulus (indicated by the blue line) continued to decrease as the temperature gradually increased to about 140°C, and when temperature continued to rise to 140°C and higher the storage modulus increased dramatically. Time scanning experiments of curing at 200 °C (Figure 3) and at 140°C (Figure 4) indicate that the storage modulus (also indicated by the blue lines) of the HPR-PSA steadily increased with time at both temperatures, reflecting that curing conferred increased mechanical performance. The steady increases of storage modulus also indicate no degradation or excessive crosslinking occurred while the HPR-PSA was being cured under either condition.

### Example 2

HPR-PSAs were manufactured as described above. These HPR-PSAs contained the identical compositions as disclosed in Example 1 except for the different amount of curing agent, the weight percentages of which are shown in Table 3, below. The HPR-PSAs were cured under the same condition as disclosed in Example 1 and the lap shear strength of each HPR-PSA was measured.

**Table 3 Lap shear strength of HPR-PSAs comprising curing agent of different levels**

| | 1 | 2 | 3 | 4 | 5 | 6 | 7 | 8 | 9 |
|---|---|---|---|---|---|---|---|---|---|
| Cure agent amount (wt%) | 0 | 0.50 | 1 | 2 | 4 | 6 | 10 | 15 | 30 |
| Lap shear strength (MPa) | 0.12 | 0.12 | 1.3 | 2.73 | 1.95 | 1.41 | 1.05 | 1.35 | 0.81 |

As shown in Table 3, most examples (except for examples 1 and 2, which did not utilize a curing agent in the amount of the claimed invention) demonstrated high lap shear results. In particular, examples 3-8 showed particularly high lap shear values. However, the lap shear decreased significantly when the curing agent amount increased to 30 wt% (example 9 having not the claimed amount of the invention). This indicates HPR-PSAs having the curing agent in an amount ranging from 1 wt% to 15 wt% had optimal mechanical properties after being cured.

### Example 3

In this example, a HPR-PSA was manufactured as described in Example 1. The HPR-PSA was cured at 170°C for 10 min. The storage modulus before and after curing were measured and the HPR-PSA demonstrated a storage modulus at 170°C of 490 Pa before curing and a storage modulus at 170°C of 2490 Pa after curing.

### Example 4

HPR-PSAs were manufactured as described above. These HPR-PSAs contained the identical compositions as disclosed in Example 1 except for the different amount of curing agent, the weight percentages of which are shown in Table 4, below. Three HPR-PSAs for each curing agent amount group were manufactured. The HPR-PSAs were cured under the same condition as disclosed in Example 1 and the wt% of gel content, which represents the degree of crosslinking, were measured.

**Table 4 Degrees of crosslinking in HPR-PSA having various amounts of the curing agent**

| **Curing agent amount (wt%)** | **wt%Gel Content** | | | **Average(wt%)** |
|---|---|---|---|---|
| 0 | 1.9 | 1.9 | 2.1 | 2.0 |
| 0.50 | 1.7 | 0.4 | 2.5 | 1.5 |
| 6 | 23.0 | 24.0 | 26.2 | 24.4 |
| 15 | 41.7 | 41.0 | 41.1 | 41.3 |

As shown in Table 4, the degrees of crosslinking of the PSA having no curing agent were small, 2.1 wt% or less, or about 2.0 wt%. HPR-PSAs demonstrated desired mechanical performance in Example 2, i.e., HPR-PSAs having 6 wt% and 15 wt% of curing agent, showed degrees of crosslinking of 24.4% and 41.3%, respectively.

## Claims

1. An adhesive comprising:
a first rubber comprising a styrene-isoprene-styrene ("SIS") copolymer in an amount of from 10 to 50 wt%, based on the total weight of the adhesive,
a second rubber comprising a styrene-butadiene ("SB") copolymer in an amount of from 10 to 50 wt%, based on the total weight of the adhesive,
a tackifier which is a mixture of a hydrocarbon resin and a rosin resin, wherein the total amount of tackifier ranges from 10 to 75 wt%, based on the total weight of the adhesive, and wherein the weight ratio of hydrocarbon resin to rosin resin is from 5:1 to 1:5; and
a curing agent comprising a phenolic derivative free of sulfur, wherein the amount of curing agent ranges from 1 to 15 wt%, based on the total weight of the adhesive, and
wherein the weight ratio of SIS to SB ranges from 4:1 to 0.25:1.

2. The adhesive of claim 1, wherein the curing agent is a mixture of alkyl phenol formaldehyde and bromized alkyl phenol formaldehyde.

3. The adhesive of claim 1, wherein the curing agent comprises bromized phenol formaldehyde, and the bromized phenol formaldehyde preferably is bromized alkyl phenol formaldehyde.

4. The adhesive of any of the preceding claims, wherein the weight ratio of the tackifier to the combined SIS and SB copolymers ranges from 0.11:1 to 4:1.

5. The adhesive of any of the preceding claims, wherein the hydrocarbon resin is selected from the group consisting of aliphatic hydrocarbon having 5 carbon atoms, aromatic hydrocarbon having 9 carbon atoms, dicyclopentadiene, and mixtures thereof, and/or
wherein the rosin resin is selected from the group consisting of glycerol ester, pentaerythritol ester, and mixtures thereof.

6. The adhesive of any of the preceding claims, wherein the curing agent has a methylol content that ranges from 5 wt% to 18 wt% based on the weight of the curing agent.

7. The adhesive of any of the preceding claims, wherein the adhesive demonstrates a storage modulus of at least 300 Pa at 170°C before being cured, and/or
wherein the adhesive demonstrates a storage modulus of at least 1800 Pa at 170°C after being cured at 170°C for 10 minutes, or the adhesive demonstrates at least a 5-fold increase as compared to the storage modulus before curing, and/or
wherein the adhesive demonstrates a peel strength of at least 0.3 Newton/millimeter (8 Newton/inch) on stainless steel according to the FINAT-1 (2016) method before curing, and/or
wherein the adhesive demonstrates a shear strength of at least 10,000 minutes on stainless steel according to the FINAT-8 (2016) method before curing, and/or
wherein the adhesive demonstrates a lap shear ranging from 0.05 MPa to 2 MPa on stainless steel before curing, and/or
wherein the adhesive demonstrates a lap shear of at least 1 MPa on stainless steel after curing, and/or
wherein the adhesive demonstrates a D-shear ranging from 0.2 to 11.8 Newton/millimeter (5 to 300 Newton/inch) before curing, and/or
wherein the adhesive demonstrates a D-shear ranging from 3.94-78.74 Newton/millimeter (100-2,000 Newton/inch) after curing,
wherein storage modulus, peel strength, shear strength, lap shear and D-shear are determined according to the methods indicated in the description.

8. An adhesive solution for coating a facestock comprising:
the adhesive according to any one of claims 1 to 7, and
a solvent;
wherein the adhesive solution preferably comprises between 25 wt% and 75 wt% solvent based on the total weight of the adhesive solution, and wherein the solvent preferably is an aromatic solvent.

9. The adhesive solution of claim 8, wherein the adhesive solution demonstrates a viscosity of 0.100-5.000 Pa·s (100-5000 cps), as determined using the Brookfield Viscometer method, testing the flow resistance of the fluid by low and medium rate rotation.

10. The adhesive solution of claim 8, wherein the adhesive solution has a solid content ranging from 30 wt% to 75 wt%.

11. A method for producing a label, wherein the method comprises
a) dissolving in a solvent at ambient temperature the adhesive of any one of claims 1 to 7 to form an adhesive solution,
b) coating a facestock with the adhesive solution, and
c) drying the adhesive solution at a temperature of less than 110°C,
wherein the SIS and SB copolymers are substantially uncrosslinked.

12. A tire label comprising the adhesive of any of the claims 1 - 7, wherein the label is attached to a tire.

## Patentansprüche

1. Haftmittel, umfassend:
einen ersten Kautschuk, umfassend ein Styrol-Isopren-Styrol ("SIS")-Copolymer in einer Menge von 10 bis 50 Gew.-%, bezogen auf das Gesamtgewicht des Haftmittels,
einen zweiten Kautschuk, umfassend ein Styrol-Butadien ("SB")-Copolymer in einer Menge von 10 bis 50 Gew.-%, bezogen auf das Gesamtgewicht des Haftmittels,
einen Klebrigmacher, der ein Gemisch aus einem Kohlenwasserstoffharz und einem Kolophoniumharz ist, wobei die Gesamtmenge des Klebrigmachers im Bereich von 10 bis 75 Gew.-% liegt, bezogen auf das Gesamtgewicht des Haftmittels, und wobei das Gewichtsverhältnis von Kohlenwasserstoffharz zu Kolophoniumharz von 5:1 bis 1:5 beträgt; und
ein Härtungsmittel, umfassend ein schwefelfreies Phenolderivat, wobei die Menge des Härtungsmittels im Bereich von 1 bis 15 Gew.-%, bezogen auf das Gesamtgewicht des Haftmittels, liegt, und
wobei das Gewichtsverhältnis von SIS zu SB im Bereich von 4:1 bis 0,25:1 liegt.

2. Haftmittel nach Anspruch 1, wobei das Härtungsmittel ein Gemisch aus Alkylphenolformaldehyd und bromiertem Alkylphenolformaldehyd ist.

3. Haftmittel nach Anspruch 1, wobei das Härtungsmittel bromiertes Phenolformaldehyd umfasst und das bromierte Phenolformaldehyd vorzugsweise bromiertes Alkylphenolformaldehyd ist.

4. Haftmittel nach einem der vorhergehenden Ansprüche, wobei das Gewichtsverhältnis des Klebrigmachers zu den kombinierten SIS- und SB-Copolymeren im Bereich von 0,11:1 bis 4:1 liegt.

5. Haftmittel nach einem der vorhergehenden Ansprüche, wobei das Kohlenwasserstoffharz ausgewählt ist aus der Gruppe, bestehend aus aliphatischem Kohlenwasserstoff mit 5 Kohlenstoffatomen, aromatischem Kohlenwasserstoff mit 9 Kohlenstoffatomen, Dicyclopentadien und Mischungen davon, und/oder
wobei das Kolophoniumharz ausgewählt ist aus der Gruppe, bestehend aus Glycerinester, Pentaerythritolester und Mischungen davon.

6. Haftmittel nach einem der vorhergehenden Ansprüche, wobei das Härtungsmittel einen Methylolgehalt im Bereich von 5 Gew.-% bis 18 Gew.-%, bezogen auf das Gewicht des Härtungsmittels, aufweist.

7. Haftmittel nach einem der vorhergehenden Ansprüche, wobei das Haftmittel vor der Aushärtung einen Speichermodul von mindestens 300 Pa bei 170 °C aufweist, und/oder
wobei das Haftmittel nach einer 10-minütigen Aushärtung bei 170 °C einen Speichermodul von mindestens 1800 Pa bei 170 °C aufweist oder das Haftmittel eine mindestens 5-fache Erhöhung im Vergleich zum Speichermodul vor der Aushärtung aufweist, und/oder
wobei das Haftmittel eine Schälfestigkeit von mindestens 0,3 Newton/Millimeter (8 Newton/Zoll) auf rostfreiem Stahl gemäß der FINAT-1 (2016)-Methode vor dem Aushärten aufweist, und/oder
wobei das Haftmittel eine Scherfestigkeit von mindestens 10.000 Minuten auf rostfreiem Stahl gemäß der FINAT-8 (2016)-Methode vor dem Aushärten aufweist, und/oder
wobei das Haftmittel eine Überlappungsscherung im Bereich von 0,05 MPa bis 2 MPa auf rostfreiem Stahl vor dem Aushärten aufweist, und/oder
wobei das Haftmittel eine Überlappungsscherung von mindestens 1 MPa auf rostfreiem Stahl nach dem Aushärten aufweist, und/oder
wobei das Haftmittel vor dem Aushärten eine D-Scherung im Bereich von 0,2 bis 11,8 Newton/Millimeter (5 bis 300 Newton/Zoll) aufweist, und/oder
wobei das Haftmittel nach der Aushärtung eine D-Scherung im Bereich von 3,94-78,74 Newton/Millimeter (100-2.000 Newton/Zoll) aufweist,
wobei Lagermodul, Schälfestigkeit, Scherfestigkeit, Überlappungsscherung und D-Scherung nach den in der Beschreibung angegebenen Methoden bestimmt werden.

8. Haftmittellösung für die Beschichtung eines Obermaterials, umfassend:
das Haftmittel nach einem der Ansprüche 1 bis 7 und
ein Lösungsmittel;
wobei die Haftmittellösung vorzugsweise zwischen 25 Gew.-% und 75 Gew.-% Lösungsmittel, bezogen auf das Gesamtgewicht der Haftmittellösung, umfasst, und wobei das Lösungsmittel vorzugsweise ein aromatisches Lösungsmittel ist.

9. Haftmittellösung nach Anspruch 8, wobei die Haftmittellösung eine Viskosität von 0,100-5,000 Pa×s (100-5000 cps) aufweist, bestimmt mit dem Brookfield-Viskosimeter-Verfahren, bei dem der Fließwiderstand des Fluids bei niedriger und mittlerer Rotationsgeschwindigkeit geprüft wird.

10. Haftmittellösung nach Anspruch 8, wobei die Haftmittellösung einen Feststoffgehalt im Bereich von 30 Gew.-% bis 75 Gew.-% aufweist.

11. Verfahren zur Herstellung eines Etiketts, wobei das Verfahren umfasst
a) das Auflösen des Haftmittels nach einem der Ansprüche 1 bis 7 in einem Lösungsmittel bei Umgebungstemperatur, um eine Haftmittellösung zu bilden,
b) das Beschichten eines Obermaterials mit der Haftmittellösung, und
c) das Trocknen der Haftmittellösung bei einer Temperatur von weniger als 110°C,
wobei die SIS- und SB-Copolymere im Wesentlichen unvernetzt sind.

12. Reifenetikett, umfassend das Haftmittel nach einem der Ansprüche 1 bis 7, wobei das Etikett an einem Reifen angebracht ist.

## Revendications

1. Adhésif comprenant :
un premier caoutchouc comprenant un copolymère de styrène-isoprène-styrène (« SIS ») en une quantité allant de 10 à 50 % en poids, basée sur le poids total de l'adhésif,
un second caoutchouc comprenant un copolymère de styrène-butadiène (« SB ») en une quantité allant de 10 à 50 % en poids, basée sur le poids total de l'adhésif,
un agent poisseux qui est un mélange d'une résine d'hydrocarbure et d'une résine de colophane, dans lequel la quantité totale de l'agent poisseux va de 10 à 75 % en poids, basée sur le poids total de l'adhésif, et dans lequel le rapport pondéral de la résine d'hydrocarbure sur la résine de colophane va de 5/1 à 1/5 ;
et
un agent durcissant comprenant un dérivé phénolique exempt de soufre, dans lequel la quantité de l'agent durcissant va de 1 à 15 % en poids, basée sur le poids total de l'adhésif, et
dans lequel le rapport pondéral de SIS sur SB va de 4/1 à 0,25/1.

2. Adhésif selon la revendication 1, dans lequel l'agent durcissant est un mélange de formaldéhyde d'alkylphénol et de formaldéhyde d'alkylphénol bromé.

3. Adhésif selon la revendication 1, dans lequel l'agent durcissant comprend du formaldéhyde de phénol bromé, et le formaldéhyde de phénol bromé est de préférence du formaldéhyde d'alkylphénol bromé.

4. Adhésif selon l'une quelconque des revendications précédentes, dans lequel le rapport pondéral de l'agent poisseux sur les copolymères de SIS et SB combinés va de 0,11/1 à 4/1.

5. Adhésif selon l'une quelconque des revendications précédentes, dans lequel la résine d'hydrocarbure est sélectionnée parmi le groupe constitué d'un hydrocarbure aliphatique ayant 5 atomes de carbone, d'un hydrocarbure aromatique ayant 9 atomes de carbone, du dicyclopentadiène et de mélanges de ceux-ci, et/ou
dans lequel la résine de colophane est sélectionnée parmi le groupe constitué de l'ester de glycérol, de l'ester de pentaérythritol et de mélanges de ceux-ci.

6. Adhésif selon l'une quelconque des revendications précédentes, dans lequel l'agent durcissant a une teneur en méthylol qui va de 5 % en poids à 18 % en poids basée sur le poids de l'agent durcissant.

7. Adhésif selon l'une quelconque des revendications précédentes, dans lequel l'adhésif démontre un module de stockage d'au moins 300 Pa à 170 0C avant d'être durci, et/ou
dans lequel l'adhésif démontre un module de stockage d'au moins 1800 Pa à 170 0C après avoir été durci à 170 °C pendant 10 minutes, ou l'adhésif démontre au moins une augmentation quintuple par rapport au module de stockage avant durcissement, et/ou
dans lequel l'adhésif démontre une résistance au pelage d'au moins 0,3 Newton/millimètre (8 Newton/pouce) sur de l'acier inoxydable conformément au procédé FINAT-1 (2016) avant durcissement, et/ou
dans lequel l'adhésif démontre une résistance au cisaillement d'au moins 10 000 minutes sur de l'acier inoxydable conformément au procédé FINAT-8 (2016) avant durcissement, et/ou
dans lequel l'adhésif démontre un cisaillement par recouvrement allant de 0,05 MPa à 2 MPa sur de l'acier inoxydable avant durcissement, et/ou
dans lequel l'adhésif démontre un cisaillement par recouvrement d'au moins 1 MPa sur de l'acier inoxydable après durcissement, et/ou
dans lequel l'adhésif démontre un taux de cisaillement allant de 0,2 à 11,8 Newton/millimètre (5 à 300 Newton/pouce) avant durcissement, et/ou
dans lequel l'adhésif démontre un taux de cisaillement allant de 3,94 à 78,74 Newton/millimètre (100 à 2000 Newton/pouce) après durcissement,
dans lequel le module de stockage, la résistance au pelage, la résistance au cisaillement, le cisaillement par recouvrement et le taux de cisaillement sont déterminés conformément aux procédés indiqués dans la description.

8. Solution d'adhésif pour enduire un frontal comprenant :
l'adhésif selon l'une quelconque des revendications 1 à 7, et
un solvant ;
dans laquelle la solution d'adhésif comprend de préférence entre 25 % en poids et 75 % en poids de solvant basée sur le poids total de la solution d'adhésif, et dans laquelle le solvant est de préférence un solvant aromatique.

9. Solution d'adhésif selon la revendication 8, dans laquelle la solution d'adhésif démontre une viscosité de 0,100 à 5000 Pa·s (100 à 5000 cps), telle que déterminée en utilisant le procédé de viscosimètre de Brookfield, testant la résistance à l'écoulement du fluide par rotation à faible vitesse et vitesse moyenne.

10. Solution d'adhésif selon la revendication 8, dans laquelle la solution d'adhésif a une teneur en solide allant de 30 % en poids à 75 % en poids.

11. Procédé de production d'une étiquette, dans lequel le procédé comprend
a) dissoudre dans un solvant à température ambiante l'adhésif selon l'une quelconque des revendications 1 à 7 pour former une solution d'adhésif,
b) enduire un frontal de la solution d'adhésif, et
c) sécher la solution d'adhésif à une température de moins de 110 °C,
dans lequel les copolymères de SIS et SB sont essentiellement non réticulés.

12. Étiquette de pneu comprenant l'adhésif selon l'une quelconque des revendications 1 à 7, dans laquelle l'étiquette est reliée à un pneu.
